# EUROPEAN PATENT SPECIFICATION

(11) **EP 1 453 748 B1**
(45) Date of publication and mention of the grant of the patent: **29.11.2006**
(21) Application number: 02790085.1
(22) Date of filing: 11.12.2002
(51) Int. Cl.: B65G 47/82, B65G 47/84, B65G 47/08, B65B 21/06

(54) **SELECTION SYSTEM**
PRODUKTAUSWAHL-SYSTEM
SYSTEME DE SELECTION

(30) Priority: 11.12.2001 GB 0129550
(43) Date of publication of application: 08.09.2004
(73) Proprietor: MeadWestvaco Packaging Systems LLC, Stamford, Connecticut 06905 (US)
(72) Inventor: BONNAIN, Jean-Christophe, F-36000 Chateauroux (FR); JOSEPH, Lilian, F-36120 Ardentes (FR)
(74) Representative: Hepworth, John Malcolm
(86) International application number: PCT/US2002/039630
(87) International publication number: WO 2003/050020

(56) References cited:
- DE-A- 3 241 100
- FR-A- 2 491 039
- FR-A- 2 802 191
- US-A- 4 552 261
- US-A- 4 804 076

## Description

### Background of the Invention

This invention relates, in general, to control of article position prior to packaging of the articles and is more particularly concerned with separating groups of predetermined quantities of the articles from a continuous stream of articles.

US Patent 5,979,147 to Reuteler concerns bottle grouping assembly and method for a packaging machine. The apparatus comprises a pair of rotatable selector wheel assemblies that rotate at constant velocity between which a double stream of bottles moves. The bottles are directed to the rotatable selector wheel assemblies and a finger attached to each rotatable selector wheel engages a selected bottle and accelerates the bottle to a machine speed that is greater than the in-feed speed.

US Patent 5,718,323 to Flix illustrates a device for spacing products having carriages each of which is capable to moving independently of the other carriages. Each carriage includes a grasping element for grasping products, individually or by lots, and a drive part for pulling the carriage on a guide rail. The grasping element and the drive part of each carriage are controlled by an electronic control box which enables spacing desired between two consecutive products to be achieved.

US 4,552,261 to Raudat and FR 2491-039 to Baumgartner discloses selection devices which comprise a lug for relating an article from a stream of articles wherein the orientation of the lug with respect to the stream of articles changes as the selection device is operational.

Both these references and the prior art refer to means for positioning or separating articles from the stream of articles and generally seek to address common problems associated with achieving consistency in the positioning or number of articles separated from the stream of articles. The present invention addresses the difficulties associated with providing versatility of operation from a single apparatus for separating articles from a stream of articles.

### Summary of the Invention

One aspect of the invention provides apparatus for separating articles or for creating groups of articles in a moving stream of such articles which apparatus comprises a rotatable body and a drive means for rotation of the rotatable body, the apparatus further comprising at least one lug assembly carried by the rotatable body and having a lug movable away from the axis of rotation of the body into an operative position and thereafter to retract during rotation of the body, wherein the drive means comprises a control means which is operable to rotate the body at a rotational velocity with a predetermined cyclic variation such that the lug can engage between a pair of articles in said stream substantially at the velocity of said stream and thereafter at increased velocity to separate an article or articles downstream of the stream of articles from the other articles in the stream, and means for maintaining the lug in a substantially perpendicular arrangement relative the article stream to improve its introduction between adjacent articles.

According to an optional feature of this aspect of the present invention the lug may be a cam activated for movement into and away from the stream of articles.

According to another optional feature of this aspect of the present invention the lug assembly may be attached to a fixed arm of the rotating body.

According to a further optional feature of this aspect of the present invention the lug assembly may comprise a lug element coupled to a lug body via a lug shaft, the lug body may contain sliding means which contact the lug shaft, the lug shaft supporting at least one biasing means.

According to yet another optional feature of this aspect of the present invention the lug element may follow a cam track, a portion of the cam track running substantially parallel to the article path such that the lug element slides with respect to the lug body such that the lug element moves substantially in parallel to the article stream over said portion of the cam track

According to a yet further optional feature of this aspect of the present invention the maintaining means comprises a single variable speed continuous belt to which the lug or lugs may be attached.

Preferably the control means may comprise means for receiving information regarding the speed of cartons in the feed path.

More preferably the control means may comprise a manual input means. Alternatively the control means may comprise a sensor arranged to measure the speed of cartons in the feed path.

The apparatus may have a sensor arranged to measure the speed of the lug or lugs.

According to a further optional feature of this aspect of the present invention the control means may vary the speed of the lug or lugs to lie within the range plus or minus 1-30% of the speed of said articles traversing the feed stream.

A second aspect of the present invention provides a method for separating articles or for creating groups of articles in a moving stream of such articles which method comprises; moving a lug assembly which is maintained in a substantially perpendicular arrangement relative to the article stream and is carried by a rotatable body away from the axis of rotation of the body into an operative position and thereafter to retract during rotation of the body; controlling a drive means which produces the rotation of the body with a predetermined cyclic variation such that the lug can engage between a pair of articles in said stream substantially at the velocity of the stream and thereafter at increased velocity to separate an article or article downstream of the stream of articles from the other articles in the stream.

Preferably the pre-determined cyclical variation is determined with reference to a size of the article, a velocity of the article and a quantity of articles to be separated from the row of articles.

Preferably the speed of an article in the stream may be received by a control means which controls the article separating apparatus. More preferably the speed of the articles is sensed automatically.

Preferably the pre-determined cyclical variation is determined with reference to a size of the article, a velocity of the article and a quantity of articles to be separated from the row of articles.

Preferably the speed of an article in the stream may be received by a control means which controls the article separating apparatus. More preferably the speed of the articles is sensed automatically.

According to an optional feature of this aspect of the present invention the speed of the or each lug is varied by the control means to lie within the range plus or minus 1-30% of the speed of the articles transversing the stream.

Advantageously, the present invention provides a system which mitigates problems such as system down-time, that occur when constant velocity rotating selection systems are required to perform a modified task, for example selecting a different quantity of articles or accounting for an altered in-feed or out-feed speed.

The present invention is generally applicable to controlling the position of articles in the proximity of the selection apparatus and, whilst being particularly applicable to grouping articles from a moving stream of articles prior to packaging, may be employed more widely.

### Brief Description of the Drawings

Exemplary embodiments of the present invention will now be described by way of example only and with reference to the accompanying drawings, in which:
FIGURE 1 is an illustration of a selection apparatus (viewed from below and to one side) constituting a first embodiment of the present invention;
FIGURE 2 shows an illustration of the selection apparatus of FIG. 1 after a first operation period;
FIGURE 2a is a graph showing velocity of a lug of the selection apparatus with the first operation period indicated;
FIGURE 3 shows an illustration of the selection apparatus of FIG. 1 after a second operation period;
FIGURE 3a is a graph showing velocity of the lug of the selection apparatus with the second operation period indicated;
FIGURE 4 shows an illustration of the selection apparatus of FIG. 1 towards the end of a third operation period;
FIGURE 4a is a graph showing velocity of the lug of the selection apparatus with the third operation period indicated; and
FIGURE 5 is an illustration of a selection apparatus (viewed from above and to one side) constituting a second embodiment of the present invention.

### Detailed Description of the Preferred Embodiments

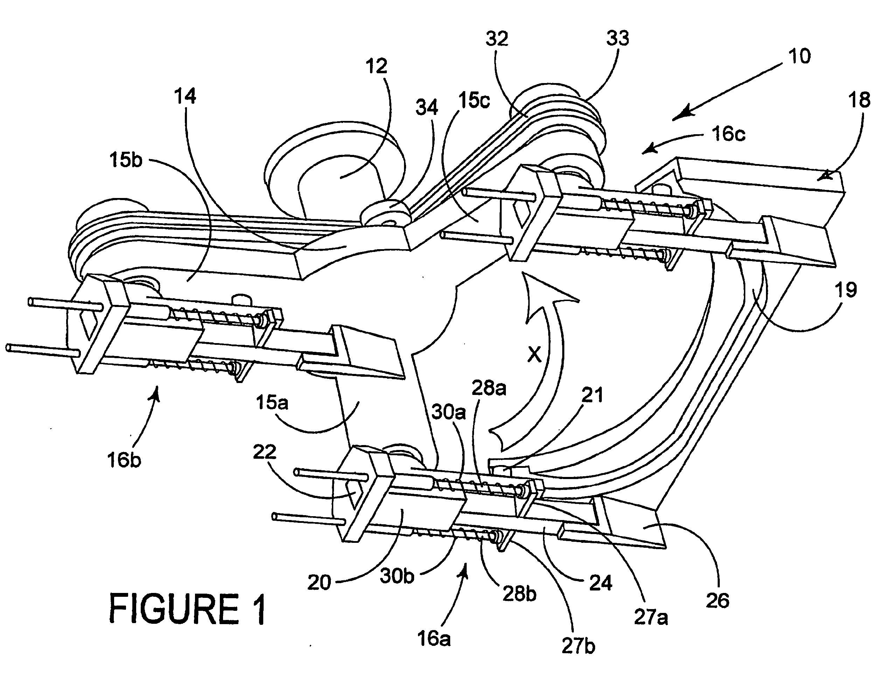

Figure 1 illustrates a selection apparatus 10 comprising a rotatable plate 14 which has a plurality of radially extending arms. In this embodiment there are three arms 15a, 15b, 15c that are equally spaced apart circumferentially of the plate. An underside of an outermost end of each arm pivotally interfaces with a lug assembly 16a, 16b, 16c. Located on a topside of the outermost end of each arm is a device means which, in this embodiment is provided by a belt guide 33 around which an endless belt 32 is fed. The belt 32 is also fed around at least one idler 34 which is mounted on a central body of the rotatable plate 14. The rotatable plate 14 is pivotally mounted on the lowermost end of a central shaft 12.

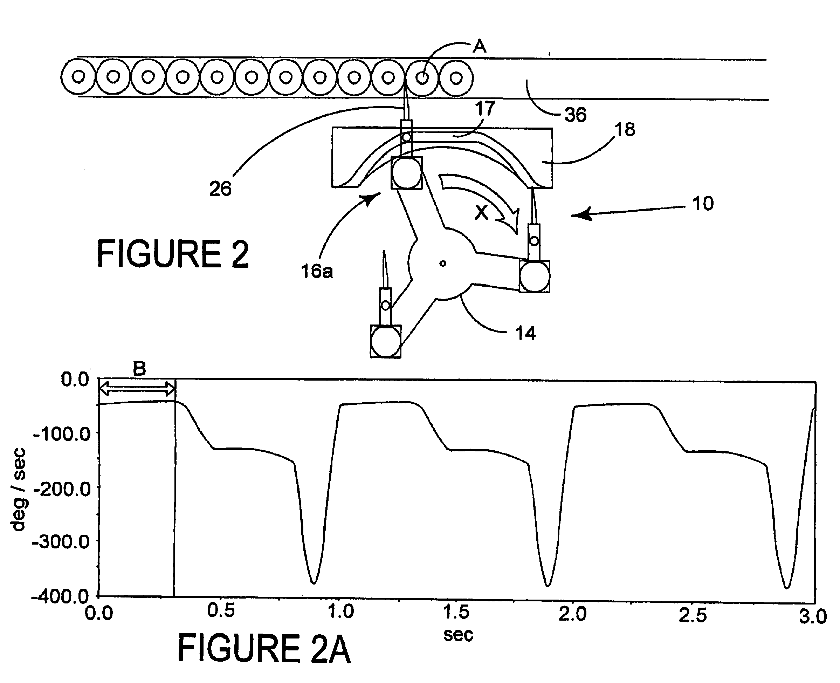

Each of the three lug assemblies 16a, 16b, 16c identically comprises a wedge-shaped lug element 26 connected to a lug body 20 via a lug shaft 24. Each lug assembly 16a, 16b, 16c is orientated such that lug element 26 points in the same direction. With reference to the lug assembly 16a as illustrated on Figure 1, a protrusion 27a from a near-face of the lug shaft 24 is coupled to a first end of a horizontally positioned pin 28a. Similarly, a protrusion 27b from a far-face of the lug shaft 24 is coupled to a first end of a pin 28b. A middle section of the pins 28a, 28b is spring loaded along a side of the lug body 20 by means of suitable resilient biasing means, for example a coil spring 30a, which surrounds the pin 28a and is secured at the first end of the pin 28a and also to the lug body 20. A second end of both pins 28a and 28b protrudes from a back face 22 of the lug body 20. A cam follower 21 is attached to an uppermost face of the lug shaft 24. Each of the lug assemblies 16a, 16b, 16c is constantly orientated with the lug element 26 protruding towards and normally of a stream of bottles or other articles A conveyed along a platform 36 (Figure 2).

A mechanical cam 18 is situated in close proximity to the rotating plate 14. Furthermore, the mechanical cam 18 is situated at approximately the same vertical level as the rotating plate 14 such that the cam follower 21 of each lug assembly sequentially engages with a cam track 19 in the underside of the mechanical cam 18 as the plate 14 rotates.

In operation, a motor assembly (not illustrated) drives the rotating plate 14 via the central shaft 12 in direction "X", i.e., clockwise, as viewed above in Figure 2. As each arm of the rotating plate 14 moves towards a far end of the mechanical cam 18, the cam follower 21 engages with the far end of the cam track 19. Thus, each lug assembly 16a, 16b, 16c, in turn, is guided through the cam track 19. The selection apparatus (including the mechanical cam 18) is situated alongside an article path (not illustrated) such that a straight middle section 17 of the cam track 19 runs parallel and closest to the article path. With reference to Figure 2, articles on the associated article path 36 move from left to right. The lug element 26 is shaped so that it may be urged smoothly between articles or between selected groups of articles.

In operation, movement of the lug element 26, relative to the lug body 20 and perpendicular to the article path, is against the spring loading of the springs 30a, 30b. When the lug shaft 24 is urged from a rest position (caused by the cam follower 21 moving through cam track 19), the springs 30a, 30b are deformed and a slidable means located within the lug body 20 enables the shaft to move smoothly out of the body.

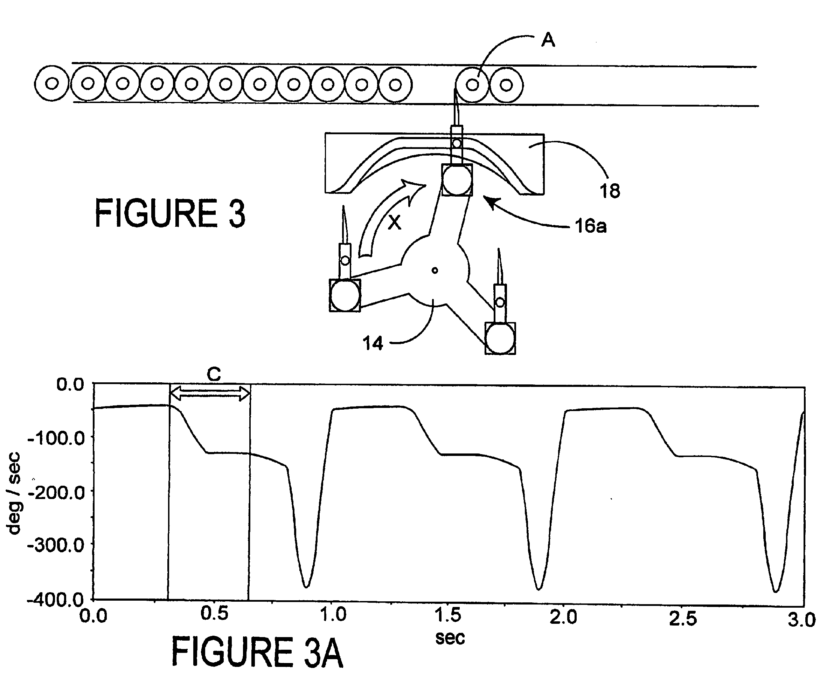

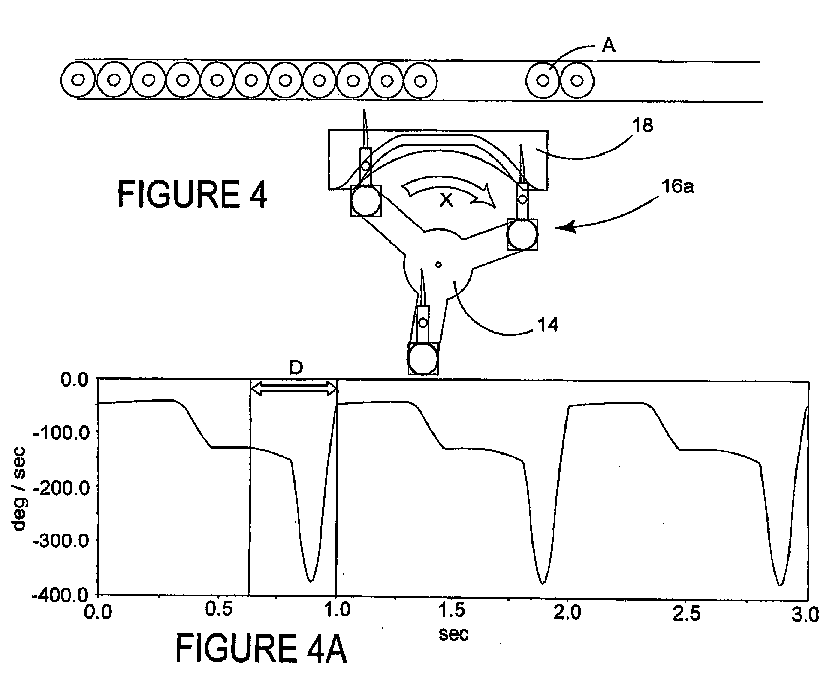

Figures 2, 3 and 4 show a schematic diagram of a plan view of the selection apparatus 10 of the present invention and an article path 36 guiding a stream of bottles "A" from the left-hand side to the right-hand side of each Figure. The in-feed stream of bottles is moving at an approximately constant velocity. Specifically, Figures 2 and 3 show the lug assembly 16a of selection apparatus 10 at the end of a first and second operation period respectively, and Figure 4 shows the lug assembly 16a towards the end of a third operation period.

Figures 2a, 3a and 4a are graphs showing the velocity of the lug assembly 16a, indicating the first, second and third operation periods B; C; D respectively. During the first operation period the velocity component parallel to the article path 36 of the lug assembly 16a is substantially similar to the velocity of the stream of bottles "A". Therefore, the lug element 26 of the lug assembly 16a may be urged between two bottles (as shown in Figure 2) with minimal disturbance to the stream of bottles "A".

During the second operation period, the velocity component parallel to the article path 36 of the lug assembly 16a comprises two aspects. Initially, the lug assembly 16a accelerates to a velocity greater than the in-feed velocity of the stream of bottles and subsequently maintains that greater velocity briefly. As illustrated in Figure 3, bottles in the article stream to the right-hand side of the lug element 26 are thereby separated from the article stream which continues to advance at a lower velocity.

During the third operation period shown in Figure 4, the velocity component parallel to the article path 36 of the lug assembly 16a comprises three aspects. The lug assembly accelerates gradually, then rapidly accelerates to its peak velocity and then equally rapidly decelerates to the in-feed velocity of the stream of bottles. Thus, initially the lug assembly 16a is removed from contact with the bottles and the rapid acceleration is required to move the second lug assembly 16b to the start of the first operation period due to the cyclical nature of the rotational velocity of selection assembly 10. In the present embodiment each operation period lasts approximately 0.3 seconds. It will be apparent to the skilled man that Figure 4 illustrates the position of the lug assembly 16a approximately 0.9 seconds after the first operation period began.

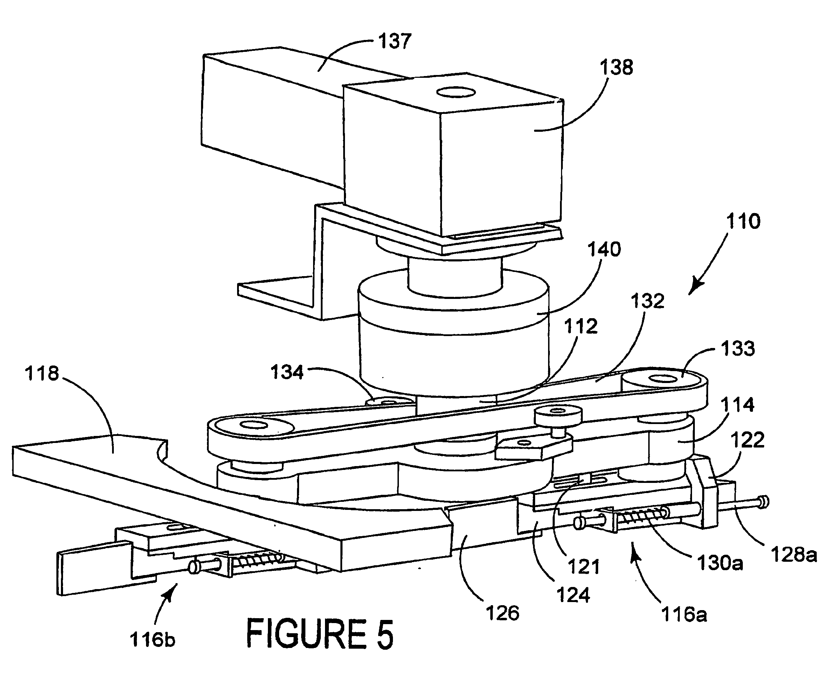

Figure 5 illustrates a second embodiment of a selection apparatus 110 and the reference numerals utilized generally indicate like components to the reference numerals of Figure 1 excepting that the reference numerals are preceded by a "1". Only the differences between the first and second embodiments will be hereinafter described. However, a rotating plate 114 of the second embodiment of the selection apparatus 110 has two (as opposed to three in the first embodiment) arms spaced at 180°. An underside of an outermost end of each arm pivotally interfaces with a lug assembly 116a, 116b which are modified from the lug assemblies 16a, 16b, 16c of Figure 1. Specifically, a pin 128a (and a pin 128b not illustrated) has a stop at both ends and also a lug shaft 124 is shorter than the lug shaft 24 of Figure 1.

A part of a suitable bearing structure to support the selection apparatus 110 is attached to an upper end of a central shaft 112. Positioned above the part of the bearing structure, but with a control connection to the central shaft 112, is a motor assembly 137, 138.

In operation, the lug assemblies 116a, 116b of the selection apparatus 110 will be subject to velocity changes similar to the velocity changes experienced by the lug assemblies 16a, 16b, 16c in the first embodiment of the present invention. Clearly, modifications will be necessary, for example, the velocity peak of the third operation period will be altered in order that the lug assembly 116a, 116b can be moved into position at the start of the cam track (not shown) once the other lug assembly 116b, 116a has reached the end of the cam track.

Importantly, the operation of both the first and second above described embodiments are generally controlled by a microprocessor. It is not usually necessary for the microprocessor to be situated within the selection apparatus 10, 110, instead the microprocessor is located away from the selection apparatus 10, 110 and has a control connection to the motor assembly 138. Specifically, the rotational velocity of the rotating plate 14, 114 during the first, second and third operation periods is determined by control data from the microprocessor which is input to the motor assembly 138. Advantageously, the control data may be varied by a user of the selection apparatus 10, 110 in order to enable various modes of apparatus operation. For example, it is envisaged that numerous velocity patterns during the first, second and third operation periods may be utilized. Also, a seamless transition between differing velocity patterns may be realized in order to accommodate a change in the in-feed velocity of articles on the article path or a change in the size or type of articles, the spacing between in-feed articles, or the article grouping ultimately required.

Changes to the control data may be initiated either by a user inputting information concerning the articles into the microprocessor, or alternatively by an article sensing means positioned at the article in-feed path which could send data to the microprocessor. The data from the article sensing means may include details of article size and weight, gaps between articles or other irregularities which may occur.

It is envisaged that the present invention may be made commercially available as an integral part of a system for selecting and packaging as well as separately to be supplied on a retrofit basis.

It will be appreciated that the above description has been given by way of example only and that modifications in detail may be made within the scope of the invention. For example, the slidable means within lug body 20 may be any suitable mechanism to allow the lug shaft 24 to move smoothly back and forth, such as a system of rollers. Also, the springs 30a, 30b, 130a, 130b located in the lug assemblies 16a, 16b, 16c, 116a, 116b may be replaced by any suitable biasing means. As will be recognized by those skilled in the art, the invention may also be realized with one arm, or four or more arms.

It will be understood that selection apparatus of different sizes may be required dependant upon how they are deployed, and similarly, motor assemblies of different powers may be required dependant upon the size of the selection apparatus and the weight of the articles.

## Claims

1. Apparatus (10; 110) for separating articles (A) or for creating groups of articles in a moving stream of such articles which apparatus (10; 110) comprises a rotatable body (14; 114) and a drive means (137, 138) for rotation of the rotatable body (14; 114), the apparatus (10; 110) further comprising at least one lug assembly (16a, 16b, 16c; 116a. 116b) carried by the rotatable body (14; 114) and having a lug (26; 126) movable away from the axis of rotation of the body (14; 114) into an operative position and thereafter to retract during rotation of the body (14; 114), wherein the drive means comprises a control means which is operable to rotate the body (14; 114) at a rotational velocity with a predetermined cyclic variation such that the lug (26; 126) can engage between a pair of articles in said stream substantially at the velocity of said stream and thereafter at increased velocity to separate an article or articles downstream of the stream of articles from the other articles in the stream, and means (20, 32) for maintaining the lug (26; 126) in a substantially perpendicular arrangement relative the article stream to improve its introduction between adjacent articles.

2. Apparatus (16; 116) according to claim 1 wherein the lug (26; 126) is cam activated for movement into and away from the stream of articles.

3. The apparatus (10; 110) according to claim 1 or 2 wherein the lug assembly (16a, 16b, 16c; 116a, 116b) is attached to a fixed arm of the rotating body (14; 114).

4. The apparatus (10; 110) according to any preceding claim, wherein the lug assembly (16a, 16b, 16c; 116a, 116b) comprises a lug element (26, 126) coupled to a lug body (20) via a lug shaft (24), said lug body (20) containing sliding means which contact the lug shaft (24), said lug shaft (24) supporting at least one biasing means (30a, 30b; 130a, 130b).

5. The apparatus (10; 110), according to claim 4 wherein the lug element (26; 126) follows a cam track (19), a portion of the cam track (19) running substantially parallel to the article path such that the lug element (26; 126) slides with respect to the lug body (20) such that the lug element (26; 126) moves substantially in parallel to the article stream over said portion of the cam track (19).

6. The apparatus (10; 110) of any preceding claim wherein the maintaining means comprises a single variable speed continuous (32; 132) belt to which the lug or lugs (26; 126) are attached.

7. The apparatus (10; 110) of claim 1, wherein the control means comprises means for receiving information regarding the speed of cartons in the feed path.

8. The apparatus (10; 110) of claim 7, wherein said control means comprises a manual input means.

9. An apparatus (10; 110) as claimed in claim 7, wherein said control means comprises a sensor arranged to measure the speed of cartons in the feed path.

10. An apparatus (10; 110) as claimed in any of claims 4 to 9, having a sensor arranged to measure the speed of said lug or lugs (26; 126).

11. An apparatus (10; 110) as claimed in any of claims 7 to 10 wherein said control means varies the speed of the lug or lugs (26; 126) to lie within the range plus or minus 1-30% of the speed of said articles (A) traversing the feed stream.

12. A method for separating articles or for creating groups of articles in a moving stream of such articles which method comprises;
moving a lug assembly which is maintained in a substantially perpendicular arrangement relative to the article stream and is carried by a rotatable body away from the axis of rotation of the body into an operative position and thereafter to retract during rotation of the body; controlling a drive means which produces the rotation of the body with a predetermined cyclic variation such that the lug can engage between a pair of articles in said stream substantially at the velocity of the stream and thereafter at increased velocity to separate an article or article downstream of the stream of articles from the other articles in the stream.

13. The method of claim 12 wherein the pre-determined cyclical variation is determined with reference to;
a size of the article,
a velocity of the article and
a quantity of articles to be separated from the row of articles.

14. A method of claim 13, wherein the speed of an article in said stream is received by a control means which controls the article separating apparatus.

15. A method of claim 14 wherein, the speed of said articles is sensed automatically.

16. A method of any of claims 14 to 15, wherein the speed of the or each lug is varied by said control means to lie within the range plus or minus 1-30% of the speed of the articles transversing said stream.

## Patentansprüche

1. Vorrichtung (10; 110) zum Trennen von Gegenständen (A) oder zum Erzeugen von Gruppen von Gegenständen in einem sich fortbewegenden Strom derartiger Gegenstände, wobei die Vorrichtung (10; 110) einen rotierbaren Körper (14; 114) und ein Antriebsmittel (137, 138) zum Rotieren des rotierbaren Körpers (14; 114) umfasst, wobei die Vorrichtung (10; 110) ferner wenigstens eine Zapfenanordnung (16a, 16b, 16c; 116a, 116b) umfasst, die von dem rotierbaren Körper (14; 114) getragen wird und einen Zapfen (26; 126) aufweist, der von der Rotationsachse des Körpers (14; 114) weg in eine betriebsfähige Position bewegt werden kann, um sich anschließend während der Rotation des Körpers (14; 114) einzuziehen, wobei das Antriebsmittel ein Steuermittel umfasst, das betriebsfähig ist, um den Körper (14; 114) mit einer Rotationsgeschwindigkeit mit einer vorbestimmten zyklischen Variation zu rotieren, so dass der Zapfen (26; 126) zwischen einem Paar von Gegenständen in dem Strom im Wesentlichen mit der Geschwindigkeit des Stroms und anschließend mit einer erhöhten Geschwindigkeit eingreifen kann, um einen Gegenstand oder Gegenstände stromabwärts des Stromes von Gegenständen von den anderen Gegenständen in dem Strom zu trennen, sowie Mittel (20, 32), um den Zapfen (26; 126) in einer im Wesentlichen senkrechten Anordnung relativ zu dem Gegenstandsstrom bei zu behalten, um dessen Einbringen zwischen benachbarte Gegenstände zu verbessern.

2. Vorrichtung (10; 110) nach Anspruch 1, wobei der Zapfen (26; 126) für eine Bewegung in den Strom von Gegenständen und aus diesem heraus von einer Nocke aktiviert wird.

3. Vorrichtung (10; 110) nach Anspruch 1 oder 2, wobei die Zapfenanordnung (16a, 16b, 16c; 116a, 116b) an einen feststehenden Arm des rotierenden Körpers (14; 114) angebracht ist.

4. Vorrichtung (10; 110) nach einem der vorhergehenden Ansprüche, wobei die Zapfenanordnung (16a, 16b, 16c; 116a, 116b) eine Zapfenelement (26; 126) umfasst, das an einen Zapfenkörper (20) über eine Zapfenwelle (24) verbunden ist, wobei der Zapfenkörper (20) Gleitmittel enthält, die die Zapfenwelle (24) berühren, wobei die Zapfenwelle (24) wenigstens ein Vorspannmittel (30a, 30b; 130a, 130b) trägt.

5. Vorrichtung (10; 110) nach Anspruch 4, wobei das Zapfenelement (26; 126) einer Nockenspur (19) folgt, wobei ein Abschnitt der Nockenspur (19) im Wesentlichen parallel zu dem Gegenstandspfad verläuft, so dass das Zapfenelement (26; 126) hinsichtlich des Zapfenkörpers (20) gleitet, so dass sich das Zapfenelement (26; 126) im Wesentlichen parallel zu dem Gegenstandsstrom über dem Abschnitt der Nockenspur (19) bewegt.

6. Vorrichtung (10; 110) nach einem der vorhergehenden Ansprüche, wobei die Beibehaltungsmittel einen einzelnen ununterbrochenen Gurt (32; 132) mit variabler Geschwindigkeit umfassen, an den der Zapfen oder die Zapfen (26; 126) angebracht sind.

7. Vorrichtung (10; 110) nach Anspruch 1, wobei das Steuermittel Mittel zum Empfangen von Informationen hinsichtlich der Geschwindigkeit von Schachteln in dem Einspeisungspfad umfasst.

8. Vorrichtung (10; 110) nach Anspruch 7, wobei das Steuermittel ein manuelles Eingabemittel umfasst.

9. Vorrichtung (10; 110) nach Anspruch 7, wobei das Steuermittel einen Sensor umfasst, der angeordnet ist, um die Geschwindigkeit der Schachteln in dem Einspeisungspfad zu messen.

10. Vorrichtung (10; 110) nach einem der Ansprüche 4 bis 9, wobei die Vorrichtung einen Sensor aufweist, der angeordnet ist, um die Geschwindigkeit des Zapfens oder der Zapfen (26; 126) zu messen.

11. Vorrichtung (10; 110) nach einem der Ansprüche 7 bis 10, wobei das Steuermittel die Geschwindigkeit des Zapfens oder der Zapfen (26; 126) derart variiert, dass diese innerhalb des Bereichs von plus oder minus 1% bis 30% der Geschwindigkeit der Gegenstände (A) liegt, die den Einspeisungsstrom durchlaufen.

12. Verfahren zum Trennen von Gegenständen oder zum Erzeugen von Gruppen von Gegenständen in einem sich fortbewegenden Strom derartiger Gegenstände, wobei das Verfahren umfasst: Bewegen einer Zapfenanordnung, die einer im Wesentlichen senkrechten Anordnung relativ zu dem Gegenstandsstrom gehalten wird und von einem rotierbaren Körper weg von der Rotationsachse des Körpers in eine betriebsfähige Position getragen wird, um sich anschließend während der Rotation des Körpers einzuziehen; Steuern eines Antriebsmittels, das die Rotation des Körpers mit einer vorbestimmten zyklischen Variation derart erzeugt, dass der Zapfen zwischen ein Paar von Gegenständen in dem Strom im Wesentlichen mit der Geschwindigkeit des Stroms und anschließend mit einer erhöhten Geschwindigkeit eingreifen kann, um einen Gegenstand oder Gegenstände stromabwärts des Stroms von Gegenständen von den anderen Gegenständen in dem Strom zu trennen.

13. Verfahren nach Anspruch 12, wobei die vorbestimmte zyklische Variation bestimmt ist hinsichtlich:
einer Größe des Gegenstands,
einer Geschwindigkeit des Gegenstands, und
einer Menge der von der Reihe von Gegenständen zu trennenden Gegenstände.

14. Verfahren nach Anspruch 13, wobei die Geschwindigkeit eines Gegenstands in dem Strom durch ein Steuermittel empfangen wird, das die Gegenstandstrennvorrichtung steuert.

15. Verfahren nach Anspruch 14, wobei die Geschwindigkeit der Gegenstände automatisch erfasst wird.

16. Verfahren nach einem der Ansprüche 14 oder 15, wobei die Geschwindigkeit des Zapfens oder jeden Zapfens von dem Steuermittel derart variiert wird, dass diese innerhalb des Bereichs von plus oder minus 1 bis 30 % der Geschwindigkeit der Gegenstände (A) liegt, die den Einspeisungsstrom durchlaufen.

## Revendications

1. Appareil (10; 110) pour séparer des articles (A) ou pour former des groupes d'articles dans un courant de circulation de ces articles, cet appareil (10; 110) comprenant un corps rotatif (14; 114) et un moyen de commande (137, 138) pour la rotation du corps rotatif (14; 114), l'appareil (10; 110) comprenant en outre, au moins, un ensemble de saillies (16a, 16b, 16c; 116a, 116b) transporté par le corps rotatif (14; 114) et ayant un saillie (26; 126) qui peut s'éloigner de l'axe de rotation du corps (14; 114) jusqu'à une position opérative et, par la suite, escamoter pendant la rotation du corps (14; 114), où le moyen de commande comprend un moyen de contrôle qui est utilisé pour roter le corps (14; 114) à une vitesse de rotation avec une variation cyclique prédéterminée de sorte que la saillie (26; 126) puisse se situer entre une paire d'articles dans ledit courant de circulation substantiellement à la vitesse dudit courant et, par la suite, à une vitesse plus élevée afin de séparer un article ou des articles en aval du courant d'articles des autres articles du courant, et un moyen (20, 32) pour maintenir la saillie (26; 126) en une position substantiellement perpendiculaire par rapport au courant d'articles pour améliorer son introduction entre les articles adjacents.

2. Appareil (16; 116) selon la revendication 1 dans lequel la saillie (26; 126) est mise en fonctionnement par une came pour donner un mouvement vers l'intérieur et vers l'extérieur du courant d'articles.

3. L'appareil (10; 110) selon la revendication 1 ou 2 dans lequel l'ensemble de saillies (16a, 16b, 16c; 116a, 116b) est fixé à un bras fixé du corps rotatif (14; 114)

4. L'appareil (10; 110) selon l'une quelconque des revendications précédentes, dans lequel l'ensemble de saillies (16a, 16b, 16c; 116a, 116b) comprend un élément en saillie (26, 126) accouplé à un corps de saillie (20) par la voie d'un arbre de saillie (24), ledit corps de saillie (20) contenant un moyen de coulissement qui est en contact avec l'arbre de saillie (24), ledit arbre de saillie (24) servant de support à, au moins, un moyen d'inclination (30a, 30b; 130a, 130b).

5. L'appareil (10; 110) selon la revendication 4 dans lequel l'élément en saillie (26; 126) suit un circuit de came (19), une partie du circuit de came (19) fonctionnant substantiellement en parallèle à la trajectoire des articles de sorte que l'élément en saillie (26; 126) coulisse par rapport à la saillie (20) de sorte que l'élément en saillie (26; 126) bouge substantiellement en parallèle au courant de circulation des articles par dessus de ladite partie du circuit de came (19).

6. L'appareil (10; 110) de l'une quelconque des revendications précédentes dans lequel le moyen de maintien comprend une seule courroie continue de vitesse variable (32; 132) à laquelle la saillie ou les saillies (26; 126) sont fixées.

7. L'appareil (10; 110) de la revendication 1 dans lequel le moyen de contrôle comprend un moyen pour recevoir information concernant la vitesse des emballages dans la trajectoire d'alimentation.

8. L'appareil (10; 110) de la revendication 7 dans lequel ledit moyen de contrôle comprend un moyen d'admission manuelle.

9. Un appareil (10; 110) tel que revendiqué dans la revendication 7 dans lequel ledit moyen de contrôle comprend un capteur disposé pour mesurer la vitesse des emballages dans la trajectoire d'alimentation.

10. Un appareil (10; 110) tel que revendiqué dans l'une quelconque des revendications 4 à 9 ayant un capteur disposé pour mesurer la vitesse de ladite saillie ou desdites saillies (26; 126).

11. Un appareil (10; 110) tel que revendiqué dans l'une quelconque des revendications 7 à 10 dans lequel ledit moyen de contrôle varie la vitesse de la saillie ou des saillies (26; 126) pour rester dans l'intervalle plus ou moins 1-30% de la vitesse desdits articles (A) traversant le courant d'alimentation.

12. Une méthode pour séparer des articles ou pour former des groupes d'articles dans un courant de circulation de ces articles, cette méthode comprenant :
le déplacement d'un ensemble de saillies qui est maintenu en une disposition substantiellement perpendiculaire par rapport au courant des articles et qui est transporté par un corps rotatif loin de l'axe de rotation du corps jusqu'à une position opérative pour escamoter, par la suite, pendant la rotation du corps; et
contrôler un moyen de commande qui produit la rotation du corps avec une variation cyclique prédéterminée de sorte que la saillie puisse se situer entre une paire d'articles dans ce courant substantiellement à la vitesse du courant et, par la suite, à une vitesse plus élevée afin de séparer un article ou articles en aval du courant d'articles des autres articles du courant.

13. La méthode de la revendication 12 dans laquelle la variation cyclique prédéterminée est déterminée par rapport:
aux dimensions de l'article,
à une vitesse de l'article, et
à une quantité d'articles à être séparés de la rangée d'articles.

14. Une méthode de la revendication 13 dans laquelle la vitesse d'un article dans ce courant est captée par un moyen de contrôle qui contrôle l'appareil pour séparer les articles.

15. Une méthode de la revendication 14 dans laquelle la vitesse desdits articles est captée de façon automatique.

16. Une méthode de l'une quelconque des revendications 14 à 15 dans laquelle la vitesse du ou de chaque saillie est variée par ledit moyen de contrôle pour rester dans l'intervalle plus ou moins 1-30% de la vitesse des articles qui traversent ledit courant.
